# EUROPEAN PATENT APPLICATION

(11) **EP 1 471 746 A2**
(43) Date of publication of application: **27.10.2004**
(21) Application number: 04075668.6
(22) Date of filing: 03.03.2004
(51) Int. Cl.: H04N 9/31

(54) **Projection device and lamp source system for such projection device**

(30) Priority: 31.03.2003 US 458393 P
(71) Applicant: BARCO N.V., 8500 Kortrijk (BE)
(72) Inventor: Lang, Richard, Tokyo 155-003 (JP); Fornier, Johan Richard, 9817 Nazareth (BE); Nakano, Hiromitsu, Yokosuka City Kanagawa Pref. 239-0804 (JP)
(74) Representative: Donné, Eddy

(57) **Abstract**

Projection device, characterized in that light (12) emitted from a light source system (1), is split in different colors (13-14-15), in particular primary colors, and subsequently is transmitted to respective light valves, characterized in that said light source system (1) comprises:
a plurality of light sources (2-3);
a plurality of reflectors (4-5) for condensing the light rays (12) from the light sources (2-3);
separation elements (6) for dividing and interlacing the light (12) of the light sources (2-3),
and in that, in the optical path between said light sources (2-3) and said separation elements (6) additional reflecting means, preferably mirrors (7-8), are provided.

## Description

The present invention generally relates to a projection device and more particularly to a light source system for such projection device.

More particularly, the invention relates to projection devices having projection displays comprising reflective or transmissive imaging devices.

Manufacturing technology breakthroughs in the last few years have allowed to produce very high quality micro-displays, such as transmissive LCD's, reflective LCOS or DMD's at competitive prices. This has led to a tremendous growth in popularity of compacter and brighter projection displays. However, the ever-increasing demand for even brighter projectors with higher contrast ratio, resolution and color uniformity, as well as faster light switching speed is continuously driving the industry to further improve the quality of the optical components and rethink the configuration of the projection optics and optical engines. Optical engineers who design projectors face such challenges as transforming light emitted from one or more lamps into a single polarized beam as efficient as possible, separating white light into uniform color bands and making light interact with the image producing displays while maintaining a very high contrast ratio.

To this end, it has already been proposed to combine the light from two lamps into a single interlaced beam by using a plurality of separation means, more particularly by using a multiple number of prisms interposed between two lamps facing each other. Examples of such dual lamp systems are disclosed in EP 1.107.611.

A first object of the present invention is to provide a projection device having a new and improved light source system of the type having a plurality of light sources or lamps. Hereby, the invention also envisages an improved light source system on itself, irrespective of the type of projection device to which it is intended.

A second object of the present invention is to provide a new and improved configuration for optical components in a projection device, said projection device comprising a plurality of lamps.

Preferably, the first object is obtained by applying features as claimed in enclosed claims 1 to 6, whereas the second object is realized by applying features as claimed in enclosed claims 7 to 17. These claims are of non restrictive nature. Furthermore, regarding additional aspects, reference is made to the following description.
Figure 1 shows a lamp source system according to the invention;
Figures 2 and 3 show other lamp source systems, which also can be used in projection devices according to the invention.
Figures 4 to 6 show three projection devices according to the invention, in which the lamp source systems of respectively figures 1 to 3 are applied.

### First aspect

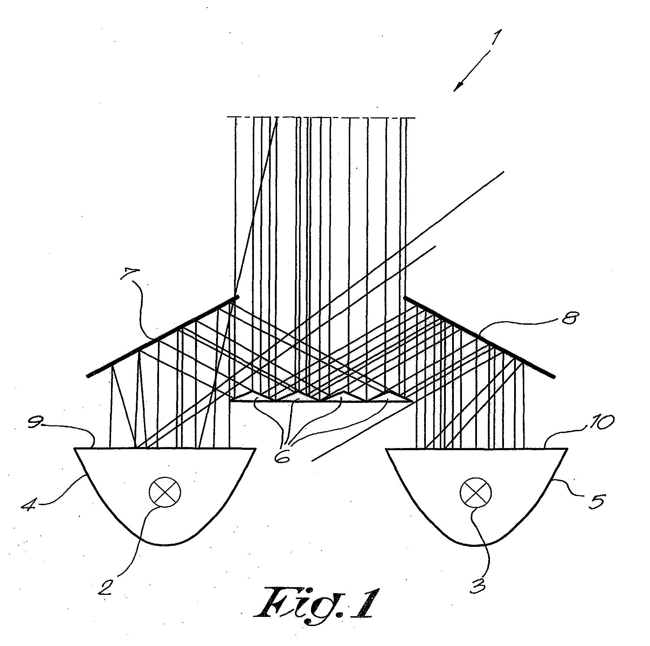

According to figure 1, the lamp source system 1 according to the invention comprises:
- a plurality of light sources 2-3, in this case two lamps;
- a plurality of reflectors 4-5 for condensing the light rays from the light sources 2-3;
- separation elements 6 for dividing and interlacing the light of the light sources 2-3,
wherein, in the optical path between the light sources 2-3 and the separation elements 6 additional reflecting means are provided, preferably formed by mirors 7-8.

The separation elements 6 preferably consist of prisms, however other reflecting elements are not excluded.

To the contrary of the lamp source systems, known from EP 1.107.611, the reflectors 4-5 are not facing each other.

More particularly, according to the invention the reflectors 4-5 are facing towards the same direction. Further, as shown in figure 1, they are preferably arranged next to each other, with their front sides 9-10 substantially in the same plane.

Moreover, the reflectors 4-5, the elements 6 and the mirors 7-8 are preferably arranged according to a mutual configuration as shown in figure 1.

According to the first aspect of the invention, several advantages are obtained, amongst which a better accessibility of the lamps, a better heat discharge, etc.

### Second aspect

According to the second aspect of the invention a combination is made of:
a) a light source system using a plurality of light sources and separation elements for dividing and interlacing the light of the light sources,
b) optical components for the actual projection device which are arranged in such configuration that at least one splitting of the light emitted from said light source system in different colors, in particular primary colors, takes place at a location in which the light of said light source system is still in a quasi-parallel or parallel state.

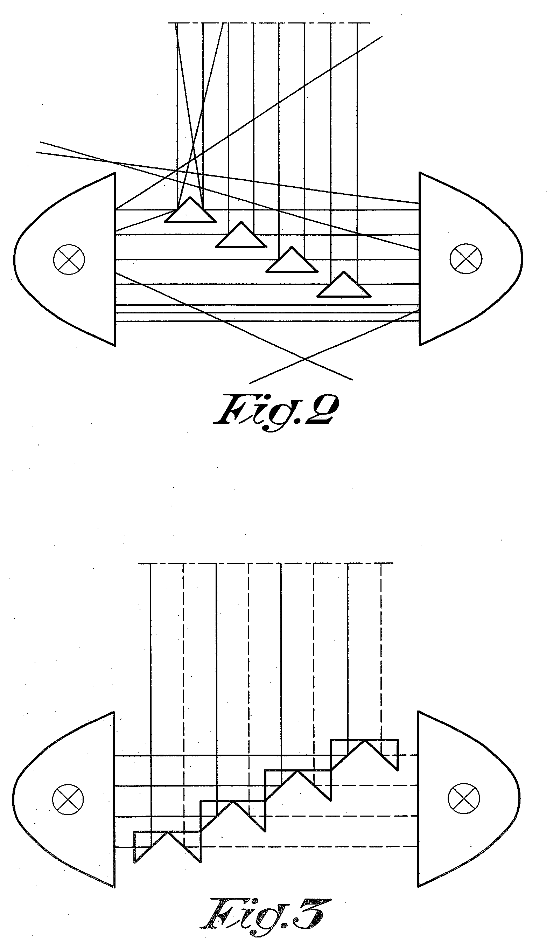

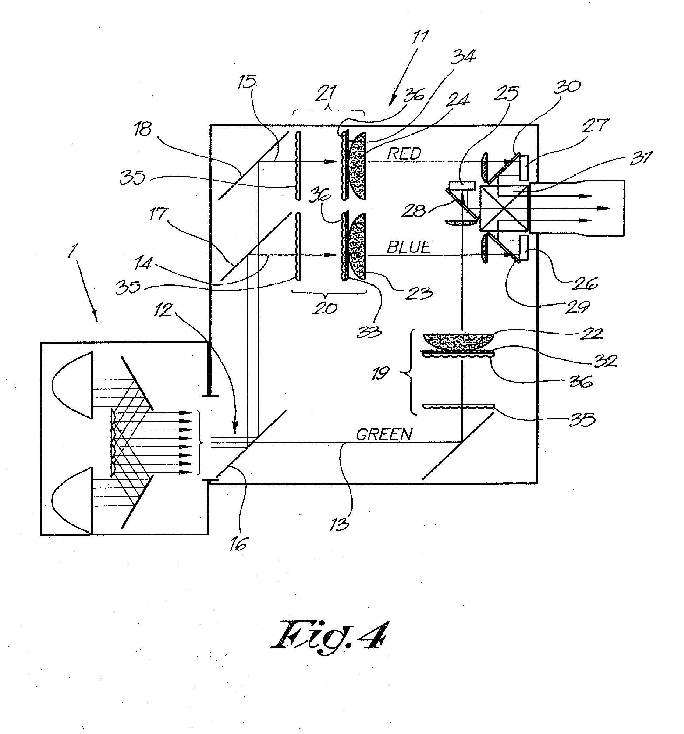

According to this second aspect, the light source system may be of the configuration of the "first aspect" of the invention, however, may also be of any other configuration using separation elements for the dividing and interlacing the light of the light sources. In other words, also light source systems as shown in figures 2 and 3 may for example be applied.

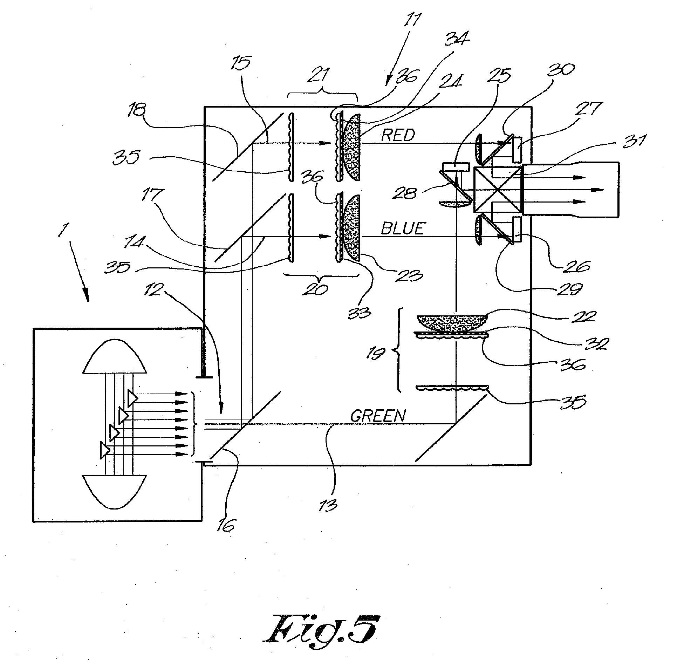

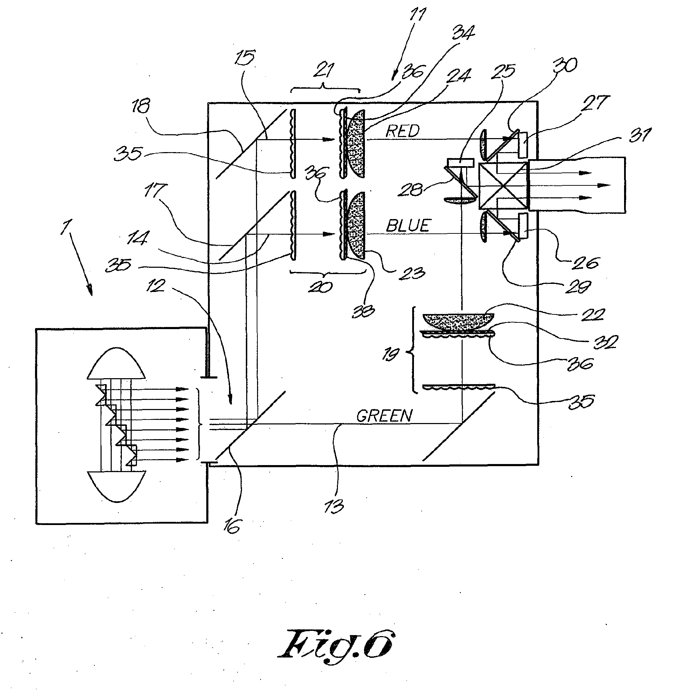

Examples of projection devices 11 applying the combination of features according to the second aspect are shown in figures 4 to 6, wherein light rays 12 emitted from a light source system 1 are split into three colors, indicated by rays 13-14-15, by means of dichroic mirrors 16-17. By means of these dichroic mirrors 16-17 and possible other mirrors 18, the rays 13-14-15 of the splitted light interact with integrators 19-20-21, which, in combination with auxiliary lenses, amongst which the imaging lenses 22-23-24, will then create a rectangular light overfill on displays 25-26-27. The colored images created by the displays 25-26-27 are then directed by the polarizing beam splitters (PBS's) 28-29-30 towards the X-cube 31 in which they are recombined in a known manner before being projected on the screen or on any other element.

Moreover, the configuration comprises prepolarizers 32-33-34 consisting of prepolarizing arrays.

Said PBS's preferably make use of wire-grid polarizers, which exhibit a very wide viewing angle and a high heat tolerance without degradation of their optical properties. Therefore, they are particularly well-suited for the harsh environment found in a high intensity projection display. A wire-grid polarizer consists in a network of narrow and elongated stripes of metal formed on a transparent substrate, the stripes being separated from each other by a narrow gap. Through the interaction of the incident light rays with the grid, waves with a polarization parallel to the length of the metallic wires are reflected while the other rays are transmitted. These polarizing devices, which do not support depolarizing multi-coatings and whose properties are not influenced by heat, make ideal substitutes for the more traditional glass PBS's in reflective LCD projection systems and allow to reach much higher contrast ratios.

The insertion of three sets of integrators 19-20-21 allows to separate the white beam of light, formed by rays 12, into its fundamental colors 13-14-15 while these rays 12, that were emitted from light sources 2-3, are still in the quasi-parallel state. This leads to better color uniformity on the screen and can also help to achieve a higher efficiency and contrast ratio since each channel can be optimized independently.

Using three sets of integrators 19-20-21 also allows to eliminate supplementary relay lenses that are usually used in at least one channel in traditional configurations.

In particular, it is clear that, in this way, each integration and also each prepolarization can be optimized in function of the primary color concerned.

Although, as shown in figures 4 to 6, the inventive aspects are preferably applied for each color separately, it can also be applied for a group of colors.

It is clear that, instead of splitting mirrors, also other light splitting elements or light separating elements can be used.

It is also clear that, instead of an X-cube 31, another color composition element can be applied.

Moreover, it is clear that, instead of an integrator 19-20-21, which, as shown in the figures, is composed of fly-eye lenses 35-36, also other types of integrators can be used, without leaving the scope of the invention.

It is to be noted that in the embodiment of enclosed figures 4 to 6, prepolarizing arrays are applied which are designed to be used in combination with fly-eye integrators and therefore are principally located after the fly-eye lenses 35-36. It is however not excluded to use prepolarizing techniques elsewhere in the system, which may be in addition to the prepolarizers used after the integrators, or which may be instead of these prepolarizers. Consequently, by way of example, there could be inserted prepolarizing elements just after the lamp source system 1 and in front of the light splitting system, or just after the light splitting system or just after any of the light splitting elements.

Of course, independently of the location, any kind of suitable prepolarizing techniques may be applied.

Furthermore, it is clear that when talking about the location of "prepolarizers", this relates to polarizing elements different from the elements which are conventionally used in the polarizing beam splitters.

Finally, it should be noted that, preferably, the light of the different colors is transmitted through the projection device in such a manner that, in respect to each other, an inversion is excluded, this preferably in combination with the use of an X-cube and transmissive displays.

By making the combination of features of the abovesaid second aspect, a further improvement of the uniformity of the light is obtained.

## Claims

1. Projection device, **characterized in that** light (12) emitted from a light source system (1), is split in different colors (13-14-15), in particular primary colors, and subsequently is transmitted to respective light valves, said light source system (1) comprising:
a plurality of light sources (2-3);
a plurality of reflectors (4-5) for condensing the light rays (12) from the light sources (2-3);
separation elements (6) for dividing and interlacing the light (12) of the light sources (2-3),
and **in that**, in the optical path between said light sources (2-3) and said separation elements (6), additional reflecting means, preferably mirrors (7-8), are provided.

2. Projection device, **characterized in that** light (12) emitted from a light source system (1), is split in different colors (13-14-15), in particular primary colors, and subsequently is transmitted to respective light valves, said light source system (1) comprising:
a plurality of light sources (2-3);
a plurality of reflectors (4-5) for condensing the light rays (12) from the light sources (2-3);
separation elements (6) for dividing and interlacing the light (12) of the light sources (2-3),
and **in that** said reflectors (4-5) are not facing each other.

3. Projection device according to claim 1 or 2, **characterized in that** the reflectors (4-5) are facing in the same direction.

4. Projection device according to claim 3, **characterized in that** the reflectors (4-5) are arranged next to each other.

5. Projection device according to claim 4, **characterized in that** the reflectors (4-5) with their front sides (9-10) are substantially in the same plane.

6. Light source system, **characterized in that** it has the features as described in any of the preceding claims.

7. Projection device according to claim 1 or 2, **characterized in that** said projection device (11) further comprises optical components which are arranged in such configuration that at least one splitting of the light (12) emitted from said light source system (1) takes place at a location in which the light (12) of said light source system (1) is still in a quasi-parallel or parallel state.

8. Projection device according to claim 1 or 2, **characterized in that** said projection device (11) further comprises optical components amongst which at least one light integrator (19-20-21) or light integrator component, which integrator (19-20-21) or light integrator component is located in the path followed by the light downstream of at least one light splitting element (16-17) for realizing said light splitting.

9. Projection device according to claim 8, **characterized in that** said device (11) comprises a light integrator (19-20-21) or light integrator components for each of said colors (13-14-15), each of these light integrators (19-20-21) or light integrator components being located in the path followed by the light downstream of the light splitting elements (16-17) creating the light (13-14-15) of the color concerned.

10. Projection device according to claim 8 or 9, **characterized in that** said light integrator components are substantially composed of fly-eye lenses (35-36), forming part of a fly-eye integrator.

11. Projection device according to any of claims 8 to 10, **characterized in that** in the path of the light (13-14-15) of at least one primary color, after being split from the other primary colors, a polarizer, in particular a prepolarizer (32-33-34), for example a prepolarizing array, is provided downstream from the corresponding integrator (19-20-21) or integrator components.

12. Projection device according to any of claims 8 to 11, **characterized in that**, in the path followed by the light (13-14-15), directly or indirectly downstream from said integrator (19-20-21) or said integrator components, an imaging lens (22-23-24) or condenser lens is provided.

13. Projection device according to any of claims 8 to 12, **characterized in that** the path followed by the light (12), upstream from the light splitting elements (16-17), is free from an integrator or integrator components.

14. Projection device according to any of claims 8 to 13, **characterized in that** the path followed by the light (12), upstream from the light splitting elements (16-17) is free from any sort of polarizer, in particular prepolarizing arrays.

15. Projection device according to any of claims 8 to 14, **characterized in that** the path followed by the light (12), upstream from the light splitting elements (16-17), is free from any sort of imaging or condenser lenses.

16. Projection device according to claim 1 or 2, **characterized in that** said projection device (11) further comprises optical components amongst which at least one polarizer (32-33-34), in particular a prepolarizing array, wherein this polarizer (32-33-34) or prepolarizing array is located downstream from at least one light splitting element (16-17), and preferably downstream of all light splitting elements (16-17) which are required to obtain the light (13-14-15) of the color in which said polarizer (32-33-34) or prepolarizing array is located.

17. Projection device according to claim 1 or 2, **characterized in that** said light valves create colored images which by means of polarizing beam splitters (28-29-30), are directed to a color composition element, such as an X-cube (31), wherein at least one of said polarizing beam splitters (28-29-30), and preferably each of said polarizing beam splitters (28-29-30), consist of wire-grid polarizers.
